# EUROPEAN PATENT SPECIFICATION

(11) **EP 2 206 215 B1**
(45) Date of publication and mention of the grant of the patent: **09.12.2015**
(21) Application number: 08830018.1
(22) Date of filing: 11.09.2008
(51) Int. Cl.: H02J 7/24, H02J 7/00, H01M 10/44, H01M 10/48

(54) **METHOD AND APPARATUS TO DETERMINE BATTERY RESONANCE**
VERFAHREN UND VORRICHTUNG ZUR BESTIMMUNG VON BATTERIERESONANZ
PROCÉDÉ ET APPAREIL POUR DÉTERMINER UNE RÉSONANCE DE BATTERIE

(30) Priority: 12.09.2007 US 900577
(43) Date of publication of application: 14.07.2010
(73) Proprietor: Global Talent Development Limited, Kowloon, Hong Kong (HK)
(72) Inventor: FEE, John, Arthur, Garland, TX 75044 (US); SZERENYI, Laszlo, St. Petersburg, FL 33707 (US)
(74) Representative: Hocking, Adrian Niall
(86) International application number: PCT/US2008/010584
(87) International publication number: WO 2009/035611

(56) References cited:
- WO-A-02/097944
- US-A- 5 783 929
- US-A1- 2006 208 694
- US-A1- 2006 208 703

## Description

### PRIORITY CLAIM

This application is a Continuation-In-Part of co-pending U.S. Patent application Serial No. 11/363,570, entitled "METHOD AND APPARATUS TO ENSURE THAT SATURATION OF THE BATTERY DOES NOT OCCUR DURING RESONANT FINDING PHASE AS WELL AS IMPLEMENTATION METHODS TO QUICKLY FIND RESONANCE", filed February 27, 2006.

### FIELD OF THE INVENTION

The present invention is generally related to battery resonance, and more specifically to techniques for determining the resonant frequency of a battery.

### BACKGROUND OF THE INVENTION

In the past, finding the resonant frequency of a battery was an expensive and time consuming process requiring as many as three days, a workbench full of specialty equipment, and a trained technician to determine the resonant frequency of the battery. Even after testing, the determined battery resonance was still a coarse, estimated value which was not precise enough to allow maximum current transfer.

### SUMMARY OF INVENTION

The present invention achieves technical advantages as a system and method to determine a resonant frequency of a battery,utilizing a PLL, digital or analog, to adjust the phase angle of a modulated current charging signal to that of the resonant frequency of the battery.

The issued 10C Patent EP 1396061, and pending U. S. patent application, teaches that, in general, battery resonance, falls anywhere from 1 Hertz to 10 kiloHertz and typically changes with the amount of charge accumulated in the battery during the charging process. It is also known that the battery accepts charge most efficiently and with least negative effects at its apparent resonant frequency. Herein, this invention is targeted at finding the at or near battery resonance and using varying resonant charging signals as the state of charge (SOC) changes by measuring the step response of the battery. This resonant-finding activity occurs when the battery charging signal is stopped. Subsequently, a step input current is applied in the form of a very low frequency square wave (or pulse) for a few cycles and the resultant ringing response is analyzed to determine its primary frequency component. After which the 10C Technologies charging algorithm charging algorithm-based charge current is applied utilizing its modulation component with the just-determined frequency. This process is periodically and regularly applied during the charging process, thereby using the most recently determined resonance frequency for the most effective and efficient charging throughout the process.

US 2006/208703, which relates to a method and apparatus to provide adaptive variable frequency charging pulses to nickel and SLA battery type, discloses an embodiment whereby PLL is used to track the charge current frequency and 'locks' the voltage frequency to that current frequency.

What is described here is one alternate method of identifying battery resonance during the process of charging a battery and repeatedly application of the most recently-determined resonant frequency during the subsequent portion of the charging cycle. Several such frequency determinations are usually made, and subsequently used, at fixed intervals during the process.

In one embodiment the derived modulation frequency is a Sine wave, other waveforms may also be used depending on their efficacy. In another embodiment a Square wave may be utilized. In this implementation it may be advantageous to use lower frequency than the actual resonance in order to simplify implementation for economic reasons. Since the largest harmonic component of a square wave is its 3rd harmonic, the modulating frequency of 1/3rd of the calculated resonant frequency can be utilized with good effects in the higher resonant frequency region.

### BRIEF DESCRIPTION OF THE DRAWINGS

FIG. 1 is a diagram of a system for determining a resonant frequency of the battery using a digital PLL, in accordance with an exemplary embodiment of the present invention;
FIG. 2 is a diagram of a method for applying a current step function at the beginning of consecutive intervals during the over-all charging cycle, not in accordance with the invention;
FIG. 3 is a diagram of a method for determining a resonant frequency of the battery using the digital PLL, in accordance with an exemplary embodiment of the present invention;
FIG. 4 is a diagram of a method for determining the resonant frequency of the battery using a "managed" delta function, not in accordance with the invention; and
FIG. 5 is a diagram of a method for determining the resonant frequency of the battery by frequency sweeping, not in accordance with the invention.

### DETAILED DESCRIPTION OF THE PRESENT INVENTION

A battery is similar to a transmission line in that electrons travel towards the positive lead and incorporate other phenomena associated with carrier group propagation delay through the battery. Such phenomena are affected by a myriad of components which interact in complex manners inside a battery cell, and not just battery plates as prior Art teaches. Battery terminal-to-terminal equivalent circuit is important to recognize in order to identify the resonant frequency of the battery as a system and ultimately, correspondingly provide a modulated current charging signal at or near the resonant frequency of the battery.

A digital PLL is used to adjust a charging signal not limited to time, frequency, phase, signal width or signal position supplied to the battery as the charge increases, the resonance decreases rapidly in the first 5% -20% State Of Charge (SOC), and then stabilizes. In one exemplary embodiment, an analog PLL, is used to find battery resonance. Advantageously, the terminal-to-terminal resonance of the battery is found, not just for example, the resonance of lead plates within the battery. The terminal-to-terminal equivalent circuit allows for charging of the entire equivalent circuit load or system, not just a portion thereof, such as battery plates.

Charging the battery terminal-to-terminal equivalent circuit has certain idiosyncrasies that must be provided and analyzed in order to allow maximum efficient current charging signal transfer. The equivalent circuit can be fundamentally represented as a current source having two terminals coupled to a load. The complex resonant frequency of the load changes as the SOC of the battery changes. For example, the battery should be considered as a single load and/or time-variant complex circuit for determining and charging at the resonant frequency, the plates in a battery can be thought of as a large portion of the variable capacitor that changes resonance as a function of state of charge. In order to maintain the most efficient current charging signal transfer, the current charging signal frequency modulating frequency must adjust to the changing resonant frequency of the battery as the battery becomes fully charged.

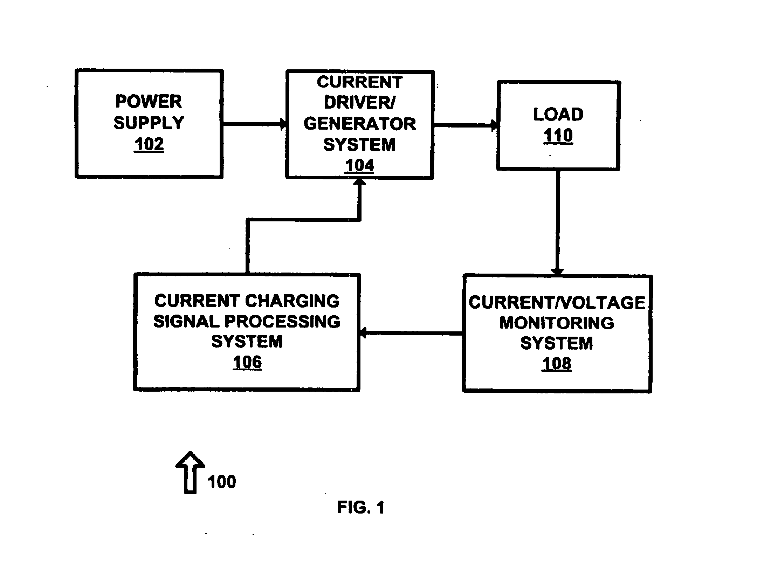

Referring to FIG. 1, there is shown at 100 a diagram of a system for determining a resonant frequency of the battery using a digital PLL, in accordance with an exemplary embodiment of the present invention. System 100 can be implemented in hardware, software or a suitable combination of hardware and software and can be one or more software systems operating on a digital signal processing platform or other suitable processing platforms. As used herein, "hardware" can include a combination of discrete components, an integrated circuit, an application-specific integrated circuit, a field programmable gate array, or other suitable hardware. As used herein, "software" can include one or more objects, agents, threads, lines of code, subroutines, separate software applications, two or more lines of code or other suitable software structures operating in two or more software applications or on two or more processors, or other suitable software structures. In one exemplary embodiment, software can include one or more lines of code or other suitable software structures operating in a general purpose software application, such as an operating system, and one or more lines of code or other suitable software structures operating in a specific purpose software application.

System 100 includes power supply 102, current driver/generator system 104, current charging signal processing system 106, current/voltage monitoring system 108, and load 110.

Power supply 102 isolates an Alternating Current (AC) signal and supplies power to current driver/generator system 104.

Current driver/generator system 104, can include a current source to provide a current charging signal to load 110.

Load 110 is the equivalent of a "black box" containing every component associated with load 110. In one exemplary embodiment, load 110 is a rechargeable Lithium Ion battery. In a second exemplary embodiment, load 110 is a rechargeable NiCd battery. In a third exemplary embodiment, load 110 is a VRLA battery.

Current/voltage monitoring system 108 contains: a current sensor adapted to provide a current monitoring signal to current charging signal processing system 106, and a battery temperature sensor adapted to provide a battery temperature signal to current charging signal processing system 106. The sensors have associated A/D converters and allow for safety functions to be implemented, such as cutting-off the modulated current charging signal being supplied to the battery, or decreasing the charge rate.

Current charging signal processing system 106 can provide a plurality of functions, such as: system control, waveform generation, Fast Fourier Transform (FFT), sampling of battery voltage, and other suitable functions. Current charging signal processing system 106 is adapted to provide a modulating waveform, a charge control signal, and a termination signal to current driver/generator system 104.

In a third exemplary embodiment, a microprocessor can determine and subsequently modulate a current source at or near the resonant frequency of the battery to be charged without the use of a PLL, nor using a compromise fixed frequency. To simplify the battery charger, the PLL is stripped away, reducing most of the calculation requirements for adjusting the phase angle, thereby reducing the piece count and therefore cost and complexity. The result is a solution wherein charging occurs at or near the resonant frequency of the battery, and although suboptimal, the results are superior to traditional charging methods.

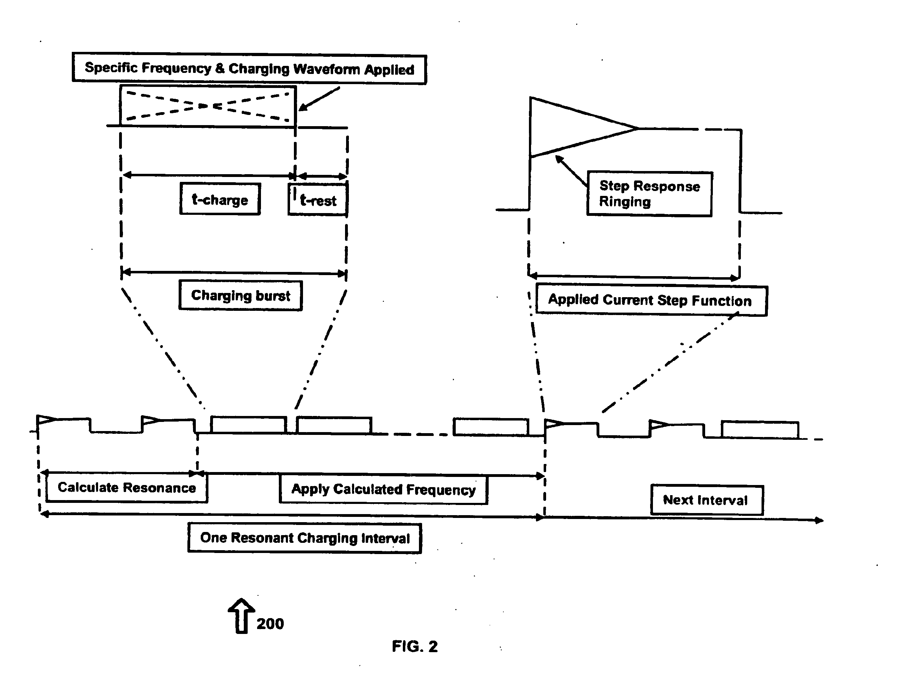

Referring to FIG. 2, there is shown at 200 a method for applying a current step function at the beginning of consecutive intervals during the over-all charging cycle, not in accordance with the invention. Method 200 can be implemented as an algorithm on a general purpose computing platform or other suitable systems.

The ringing response of the battery is analyzed and the fundamental frequency obtained is then applied as the modulation component of the charging signal during one charging interval. The process is then repeated for the next battery-charging interval. In one exemplary embodiment, the charging intervals are two minutes in length, however other interval lengths may be chosen in other implementations. The wave shape of the modulating waveform is sinusoidal in one application, however other wave shapes, such as square waves, or triangle waves may also be utilized at the fundamental frequency or its subharmonics.

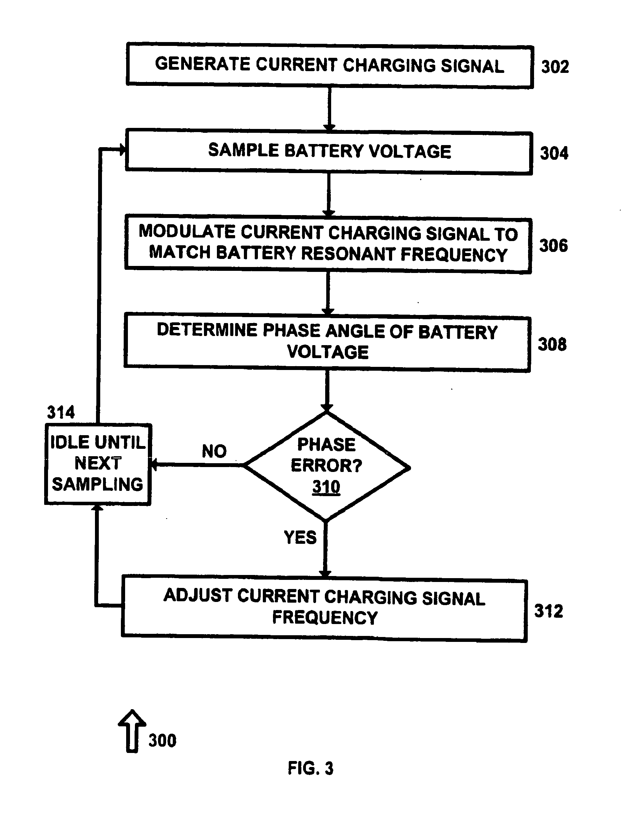

Referring to FIG. 3, there is shown at 300 a method for determining a resonant frequency of the battery using the digital PLL, in accordance with an exemplary embodiment of the present invention. Method 300 can be implemented as an algorithm on a general purpose computing platform or other suitable systems.

Method 300 begins at 302, where a current source generates a modulated current charging signal. In one exemplary embodiment, the modulating signal is defaulted to a previously stored frequency. In a second exemplary embodiment, the previously stored frequency is based on the Manufacturer of the battery. In a third exemplary embodiment, the frequency is dependent on the battery chemistry or size. The method then proceeds to 304.

At 304, the battery voltage is sampled. The method then proceeds to 306.

At 306, the battery voltage frequency is matched. The method then proceeds to 308.

At 308, the phase of the battery voltage is determined. The method then proceeds to 310.

At 310, it is determined whether there is a phase error between the battery voltage and the modulated current charging signal. If a phase error exists, the method proceeds to 312. If a phase error does not exist, the method proceeds to 314.

At 312, the frequency of the modulated current charging signal is adjusted to align the phase angle of the battery voltage and the modulated charging signal. If a phase error exists, then, depending upon lagging or leading, the digital PLL adjusts the modulation frequency up or down, as needed, to eliminate the phase error and ensure that the battery voltage and the modulated current charging signal are in phase. In one exemplary embodiment, a digital PLL applies the current charging signal to the battery, and phase or time adjusts the current charging signal to the battery voltage based upon the time delay and/or the phase delay of the current charging signal. The method then proceeds to 314.

At 314, the algorithm is idle until the next sampling. In one exemplary embodiment, the sampling occurs approximately every 10 seconds until the battery is completely full. The method then proceeds to 304, and the process is repeated until the battery is fully charged.

Typically, the modulation frequency is initialized at a very high frequency, and as the SOC increases, it the frequency drops quasi-exponentially and flattens out to a quasi-steady state level. In one case, using the mean value of resonance versus charging curves for different battery manufacturers, the average resonant frequency band is approximately 100 to 120 hertz, and most of the resonant charging occurs within that frequency. Automating the determination and subsequent tracking of the resonant frequency provides a more cost efficient solution because the trained technician is no longer required. However, this requires more hardware than using a fixed frequency.

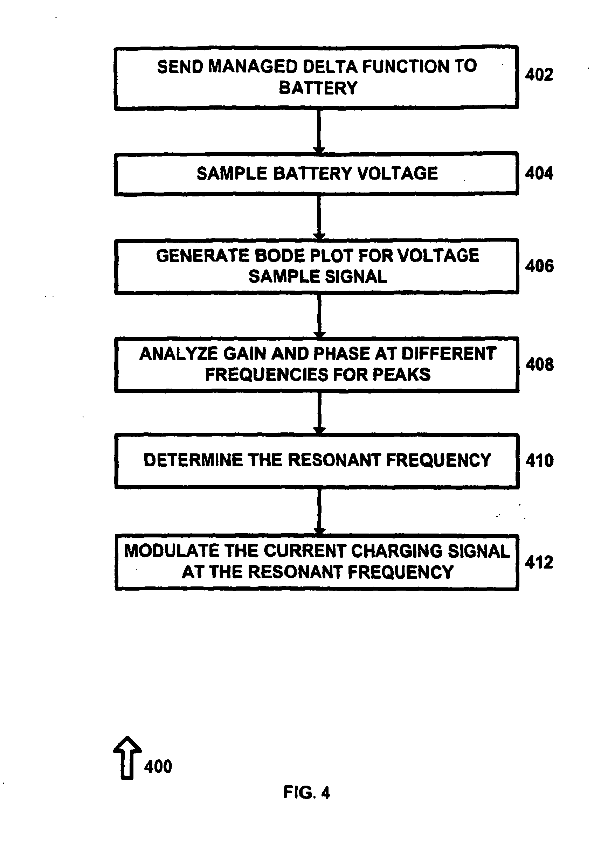

Referring now to FIG. 4, there is shown at 400 a method for determining the resonant frequency of the battery using a "managed" delta function, not in accordance with the invention. Method 400 can be implemented as an algorithm on a general purpose computing platform or other suitable systems.

Using an infinite delta function drives the battery into a non-linear region and can give a false indication of battery resonance. Therefore, using a "managed," or "clipped" delta function provides just enough energy to determine the resonant frequency of a battery without driving the battery into a non-linear region.

Method 400 begins at 402, where a "managed" delta function is applied to a battery. The method then proceeds to 404.

At 404, sample the battery voltage. The method then proceeds to 406.

At 406, a Bode plot of the voltage sample signal is generated, or rather gain and phase data is generated. The method then proceeds to 408.

At 408, both the gain and the phase at different frequencies are analyzed for voltage peaks. In one exemplary embodiment, Fourier analysis of the voltage sample signal can determine the battery resonant frequency. The method then proceeds to 410.

At 410, the battery resonance frequency is determined by comparing voltage peaks and selecting the frequency having the highest peak value as the resonant frequency. The method then proceeds to 412.

At 412, the battery is charged at the most current resonant frequency. After every sampling period, 10 seconds for example, another delta function is applied to the battery, the voltage is sampled, Bode plot data generated, the gain and the phase at different frequencies are analyzed, the new resonant frequency is determined, and charging at that resonant frequency begins, and so on and so forth until the battery is fully charged. Supplying an energy managed impulse such that the battery does not saturate is of paramount importance. Otherwise, clipping occurs and the system is flooded with harmonic distortion obscuring the resonant frequency of the battery and wasting energy. A non-linear function by its very nature, typically, is wasted energy because it's saturated and so does not deliver efficient energy to an energy storage medium. Driving the battery into saturation actually appears to be saving energy, when in fact energy is being wasted. The most efficient energy transfer to the battery is realized when the charge frequency error is within 1 %.

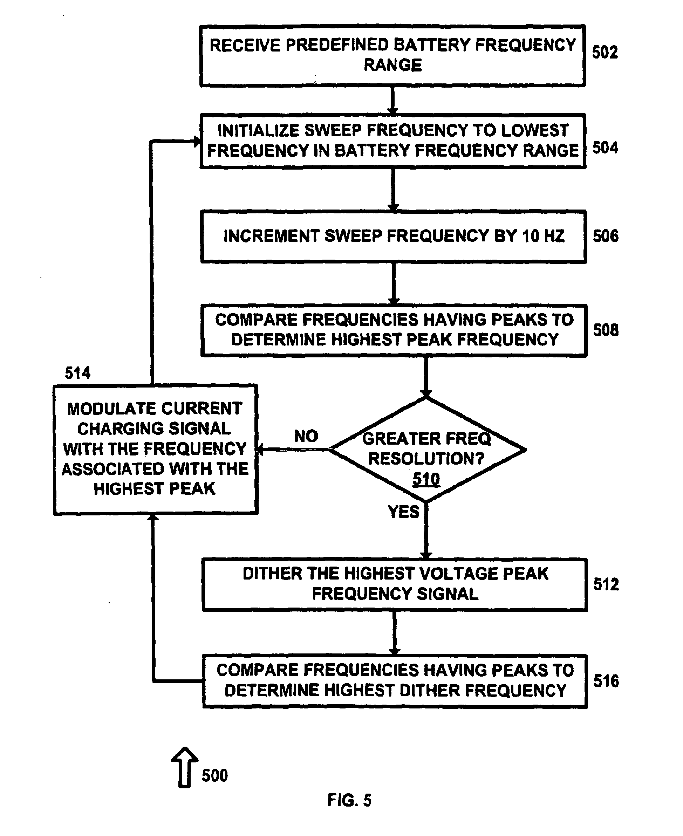

Referring now to FIG. 5, there is shown at 500 a method for determining the resonant frequency of the battery by frequency sweeping, not in accordance the invention. Method 500 can be implemented as an algorithm on a general purpose computing platform or other suitable systems.

Method 500 begins at 502, where a predefined battery frequency range is received. The method then proceeds to 504.

At 504, the sweep frequency is initialized to the lowest frequency in the frequency range. The method then proceeds to 506.

At 506, the sweep frequency is incremented by 10 hertz until the entire battery frequency range is covered. The method then proceeds to 508.

At 508, the highest peak is determined by comparing the frequencies having voltage peaks. The method then proceeds to 510.

At 510, it is determined whether or not further frequency refinement is desired. The method proceeds to 512 if further frequency refinement is desired. The method proceeds to 514 if further frequency refinement is not desired.

At 512, the highest voltage peak frequency is further refined by dithering the highest voltage peak frequency signal. The method then proceeds to 516.

At 516, the highest dither peak is determined by comparing the frequencies having voltage peaks. The method then proceeds to 516.

At 514, the current charging signal is modulated at the frequency having the highest voltage peak.

Using a sweep frequency measurement, below battery saturation, the current is modulated as a function of frequency and determines which frequencies contain voltage peaks. The voltage peaks indicate, like a tuned circuit, frequencies at which the battery is accepting maximum current. And as the battery is swept by the probe signal, a plurality of current peaks may be found. The computer then decides which frequency generates the greatest or most efficient current delivery to the battery. The computer then either dithers it, or modulates with a Δf/ Δt transfer function. Dithering around the peak allows for more quickly and accurately determining the battery's resonant peak frequencies, as opposed to sweeping alone.

Once the peak is determined, the charge current is applied for 10 seconds, and stopped. The new voltage peak is guessed or the prior frequency is used to restart the process, providing another frequency to tune to and dither again, for example. If dithering is undesirable, the frequency is swept at a lower frequency, because the SOC is higher. However, dithering allows frequency refinement by moving from course frequency granularity, finding and recording the broad peaks, and re-dithering at these broad peaks to a higher resolution frequency granularity to find the exact peaks. This process is repeated until the desired peaks are analyzed and recorded.

However, after sweeping, if it appears as though the energy is flat, then the battery is typically saturated. If saturated, attenuate or drop the delta function by 3dB or 6dB and try to find the peaks again by the aforementioned process.

In general decrease the larger signal to a smaller signal to find the point where saturation of the battery does not occur. After sweeping and ensuring no saturation, the maximum small signal that can be applied to the battery is determined, giving a threshold under which the sweeping and subsequently dithered small signal level should be maintained.

Additionally when charging or determining resonance, the use of small signal modulation, at several frequencies, is possible, where there is the fundamental resonant frequency and n times the fundamental resonant frequency, whether it be even or odd, where most of the energy would be maintained in the fundamental resonant frequency, but the harmonics of the fundamental resonant frequency would contribute significant energy as well.

In one exemplary embodiment, utilizing the resonant frequency harmonics in battery charging could actually help increase the speed of the charge. Application of the harmonic charging would be most useful for large energy storage devices. For example, fork lift batteries, which hold thousands of ampere hours of c apacity. We define multi-frequency as not changing phase modulation but, using its multi-tones of modulated current, which match the fundamental resonant frequency and most of the energy of the harmonics of batteries, thereby increasing the charge efficiency and the charge speed and reducing heat.

In a second exemplary embodiment, a three-stage testing station containing a calorimeter, electro-interference spectroscopy (EIS), and a potentiostat, is used to determine the resonant frequency of a battery. The potentiostat is used to measure the waveform very precisely. The EIS device measures the spectral energy, and the calorimeter measures the heat. In a second exemplary embodiment, a device which integrates all three measurement devices takes a single battery cell and is coupled to the calorimeter, and a signal is applied to the battery cell, the signal can be modulated or otherwise tested measured using the EIS via an applied waveform which is precisely measured to the nearest nanovolt, and as a result, the amount of heat emitted from the battery is precisely determined as a function of waveform. So, one can use this procedure to measure over the stated charge transfer to the battery , how much energy is wasted via the calorimeter. Note this does not calculate chemical charge inefficiencies. However, optimizing the waveform using the 3 systems to optimize charging at resonance can be compared to charging in other sub-optimal manners.

The present invention derives technical advantages because first, other solutions are not optimal either from a cost/economic or performance point of view. Moreover, the shortcoming of the fixed frequency approach is its dependence on battery chemistry and/or manufacturer. The solution advocated here is for a best compromise, whereby the frequency is changed in discrete steps as the SOC changes. It has a further advantage that it is independent of the specific battery's manufacture or chemistry, thus it is specific to the actual battery in use.

The present invention achieves further technical advantages by providing a charging signal that is optimized to the battery under charge at all times.

Though the invention has been described with respect to a specific preferred embodiment, many variations and modifications will become apparent to those skilled in the art upon reading the present application. It is therefore the intention that the appended claims be interpreted as broadly as possible in view of the prior art to include all such variations and modifications.

## Claims

1. A system (100) for determining a resonant frequency of the battery, comprising:
a power supply (102) adapted to provide a power signal;
a current driver/generator system (104) adapted to receive a power signal and generate a current charging signal;
a current/voltage monitoring system (108) adapted to receive current and battery temperature signals, and generate a current monitoring signal and a battery temperature signal;
a current charging signal processing system (106) adapted to receive the current monitoring signal and a battery temperature signal and provide a control signal to the current driver/generator system, and modulate the current charging signal with a waveform, a phase-locked loop (PLL) adapted to adjust the phase angle of the modulated current charging signal to that of a resonant frequency of the battery; and
a load (110), adapted to receive the adjusted and modulated current charging signal.

2. The system (100) of Claim 1, wherein the current and battery signals are generated by sensors.

3. The system (100) of Claim 1, wherein the current and battery signals are converted to digital with Analog to Digital converters.

4. The system (100) of Claim 1, wherein the current charging signal processing system performs a Fast Fourier Transform (FFT).

5. The system (100) of Claim 1, wherein the current charging signal processing system supplies a charge cut-off signal to the current driver/generator system.

6. A method (300) for determining a resonant frequency of the battery using a phase-locked loop (PLL), comprising:
generating a current charging signal (302);
sampling a battery voltage (304);
modulating current charging signal to match battery resonant frequency (306);
determining a phase angle of the battery voltage sample and the modulated current charging signal (308);
determining whether there is a phase error between the modulated current charging signal and the battery voltage sample (310);
adjusting the modulated current charging signal frequency to eliminate the phase angle error (312); and
idling until a next battery voltage sampling (314).

7. The method (300) of Claim 6, wherein the battery voltage is sampled with a sensor.

8. The method (300) of Claim 6, wherein the current charging signal is modulated by a microprocessor.

9. The method (300) of Claim 6, wherein the phase angle of the battery voltage sample and the modulated current charging signal is calculated with a microprocessor.

10. The method (300) of Claim 6, wherein the modulated current charging signal frequency is adjusted by a microprocessor.

11. The method (300) of Claim 6, wherein the current charge signal is generated by defaulting to a previously stored frequency.

12. The method (300) of Claim 11, wherein the previously stored frequency is based on the manufacturer of the battery.

## Patentansprüche

1. System (100) zur Bestimmung einer Resonanzfrequenz der Batterie, umfassend:
eine Stromversorgung (102), die angepasst ist, um ein Leistungssignal bereitzustellen;
ein Stromtreiber-/Generatorsystem (104), das angepasst ist, um ein Leistungssignal zu empfangen und ein Stromladesignal zu generieren;
ein Strom-/Spannungsüberwachungssystem (108), das angepasst ist, um Strom- und Batterietemperatursignale zu empfangen, und ein Stromüberwachungssignal und ein Batterietemperatursignal zu generieren;
ein Stromladesignalverarbeitungssystem (106), das angepasst ist, um das Stromüberwachungssignal und ein Batterietemperatursignal zu empfangen und dem Stromtreiber-/Generatorsystem ein Steuerungssignal bereitzustellen, und das Stromladesignal mit einer Wellenform zu modulieren, einer Phasenregelschleife (PLL), die angepasst ist, um den Phasenwinkel des modulierten Stromladesignals an den einer Resonanzfrequenz der Batterie anzupassen; und
eine Ladung (110), die angepasst ist, um das angepasste und modulierte Stromladesignal zu empfangen.

2. System (100) nach Anspruch 1, wobei die Strom- und Batteriesignale von Sensoren generiert werden.

3. System (100) nach Anspruch 1, wobei die Strom- und Batteriesignale mit Analog-zu-Digital-Konvertern in digital konvertiert werden.

4. System (100) nach Anspruch 1, wobei das Stromladesignalverarbeitungssystem eine schnelle FourierTransformation (FFT) durchführt.

5. System (100) nach Anspruch 1, wobei das Stromladesignalverarbeitungssystem ein Ladetrennsignal an das Stromtreiber-/Generatorsystem liefert.

6. Verfahren (300) zur Bestimmung einer Resonanzfrequenz der Batterie unter Verwendung einer Phasenregelschleife (PLL), umfassend:
Generieren eines Stromladesignals (302);
Sampeln einer Batteriespannung (304);
Modulieren des Stromladesignals, sodass es mit der Batterieresonanzfrequenz übereinstimmt (306);
Bestimmen eines Phasenwinkels des Batteriespannungssamples und des modulierten Stromladesignals (308);
Bestimmen, ob es einen Phasenfehler zwischen dem modulierten Stromladesignal und dem Batteriespannungssample gibt (310);
Anpassen der modulierten Stromladesignalfrequenz zum Beseitigen des Phasenwinkelfehlers (312); und
Leerlauf bis zu einem nächsten Batteriespannungssampling (314).

7. Verfahren (300) nach Anspruch 6, wobei die Batteriespannung mit einem Sensor gesampelt wird.

8. Verfahren (300) nach Anspruch 6, wobei das Stromladesignal durch einen Mikroprozessor moduliert wird.

9. Verfahren (300) nach Anspruch 6, wobei der Phasenwinkel des Batteriespannungssamples und des modulierten Stromladesignals mit einem Mikroprozessor berechnet wird.

10. Verfahren (300) nach Anspruch 6, wobei die modulierte Stromladesignalfrequenz durch einen Mikroprozessor angepasst wird.

11. Verfahren (300) nach Anspruch 6, wobei das Stromladesignal durch Zurückkehren zu einer zuvor gespeicherten Frequenz generiert wird.

12. Verfahren (300) nach Anspruch 11, wobei die zuvor gespeicherte Frequenz auf dem Hersteller der Batterie basiert.

## Revendications

1. Système (100) de détermination d'une fréquence de résonance de la batterie, comprenant :
une alimentation en énergie (102) adaptée pour produire un signal de puissance ;
un système générateur/excitateur de courant (104) adapté pour recevoir un signal de puissance et générer un signal de charge de courant ;
un système de surveillance de courant/tension (108) adapté pour recevoir des signaux de température de batterie et de courant, et générer un signal de surveillance de courant et un signal de température de batterie ;
un système de traitement de signal de charge de courant (106) adapté pour recevoir le signal de surveillance de courant et un signal de température de batterie et délivrer un signal de commande au système générateur/excitateur de courant, et moduler le signal de charge de courant avec une forme d'onde, une boucle à verrouillage de phase (PLL) étant adaptée pour régler l'angle de phase du signal de charge de courant modulé sur celui d'une fréquence de résonance de la batterie ; et
une charge (110), adaptée pour recevoir le signal de charge de courant ajusté et modulé.

2. Système (100) selon la revendication 1, dans lequel les signaux de courant et de batterie sont générés par des capteurs.

3. Système (100) selon la revendication 1, dans lequel les signaux de courant et de batterie sont convertis en signaux numériques par des convertisseurs analogiques-numériques.

4. Système (100) selon la revendication 1, dans lequel le système de traitement de signal de charge de courant effectue une transformée de Fourier rapide (FFT).

5. Système (100) selon la revendication 1, dans lequel le système de traitement de signal de charge de courant délivre un signal de fin de charge au système générateur/excitateur de courant.

6. Procédé (300) de détermination d'une fréquence de résonance de la batterie à l'aide d'une boucle à verrouillage de phase (PLL), comprenant les opérations consistant à :
générer un signal de charge de courant (302) ;
échantillonner une tension de batterie (304) ;
moduler un signal de charge de courant pour correspondre à la fréquence de résonance de batterie (306) ;
déterminer un angle de phase de l'échantillon de tension de batterie et du signal de charge de courant modulé (308) ;
déterminer s'il y a une erreur de phase entre le signal de charge de courant modulé et l'échantillon de tension de batterie (310) ;
ajuster la fréquence du signal de charge de courant modulé pour éliminer l'erreur d'angle de phase (312) ; et
fonctionner à vide jusqu'à un prochain échantillonnage de tension de batterie (314).

7. Procédé (300) selon la revendication 6, dans lequel la tension de batterie est échantillonnée avec un capteur.

8. Procédé (300) selon la revendication 6, dans lequel le signal de charge de courant est modulé par un microprocesseur.

9. Procédé (300) selon la revendication 6, dans lequel l'angle de phase de l'échantillon de tension de batterie et du signal de charge de courant modulé est calculé avec un microprocesseur.

10. Procédé (300) selon la revendication 6, dans lequel la fréquence du signal de charge de courant modulé est ajustée par un microprocesseur.

11. Procédé (300) selon la revendication 6, dans lequel le signal de charge de courant est générer par défaut à une fréquence mémorisée précédemment.

12. Procédé (300) selon la revendication 11, dans lequel la fréquence mémorisée précédemment repose sur le fabricant de la batterie.
